# EUROPÄISCHE PATENTSCHRIFT

(11) **EP 1 826 640 B1**
(45) Veröffentlichungstag und Bekanntmachung des Hinweises auf die Patenterteilung: **02.09.2009**
(21) Anmeldenummer: 07102463.2
(22) Anmeldetag: 15.02.2007
(51) Int. Cl.: G05B 9/00

(54) **Verfahren zur sicherheitsgerichteten Ansteuerung eines Stellgliedes**
Method for safety oriented activation of an actuator
Procédé de commande sécurisée d'un actionneur

(30) Priorität: 23.02.2006 DE 102006008475
(43) Veröffentlichungstag der Anmeldung: 29.08.2007
(73) Patentinhaber: Siemens Building Technologies HVAC Products GmbH, 76437 Rastatt (DE)
(72) Erfinder: Hangauer, Wilfried, Dr., 76437 Rastatt (DE); Lelle, Josef, 76532 Baden-Baden (DE)
(74) Vertreter: Maier, Daniel Oliver

(56) Entgegenhaltungen:
- US-A- 4 879 643
- US-A- 5 245 262
- US-A- 5 377 096

## Beschreibung

Die Erfindung betrifft ein Verfahren zur sicherheitsgerichteten Ansteuerung eines Stellgliedes und eine Vorrichtung zur Durchführung des Verfahrens.

Feuerungsautomaten mit einem Mikroprozessor werden zur Steuerung beziehungsweise Reglung eines Brenners und zur Überwachung des Brennerbetriebes eingesetzt. Die sicherheitstechnischen Anforderungen hinsichtlich des Feuerungsautomaten sind beispielsweise in der Europäischen Norm EN 298 festgelegt. In der Norm wird beispielsweise gefordert, das irgendein Fehler in irgendeinem Bauteil, oder irgendein Fehler zusammen mit einem Fehler, herrührend von jenem ersten Fehler, zur Folge hat, dass der Feuerungsautomat in einen nicht funktionsfähigen Zustand übergeführt wird, wobei alle Ventilausgänge spannungslos sind. Darüber hinaus bestehen nach der Norm zusätzliche Anforderungen für eine komplexe Elektronik. Beispielsweise müssen Bauteile mit direkten sicherheitskritischen Funktionen, wie beispielsweise Ventilsteuerung, Mikroprozessoren in den dazugehörigen Schaltkreisen durch Sicherheitsüberwachungseinrichtungen zum Beispiel durch so genannte Watch-Dog-Schaltungen geschützt werden.

In diesem Zusammenhang ist es bereits bekannt zur Ansteuerung einer Watch-Dog-Schaltung ein von dem Mikroprozessor des Feuerungsautomaten erzeugtes dynamisches Signal zu verwenden. Auf diese Weise unterbleibt bei Auftreten von statischen Signalfehlern am Mikroprozessorausgang die Ansteuerung des Brennstoffventils. Auch wenn eine Fehlerfreiheit des dynamischen Signals angenommen wird, so ist dennoch ein zusätzlicher Abschaltpfad wünschenswert, damit auch hinzutretende elektronische Bauteilfehler beherrscht werden können.

Der Erfindung liegt die Aufgabe zu Grunde, ein Verfahren zur sicherheitsgerichteten Ansteuerung eines Stellgliedes vorzuschlagen, welches bei Auftreten von beliebigen elektronische Bauteilfehlern eine zuverlässige Abschaltung des Stellgliedes ermöglicht, ohne das sicherheitstechnische Aspekte vernachlässigt werden.
Die genannte Aufgabe wird durch die Merkmale des Verfahrensanspruches beziehungsweise des Vorrichtungsanspruches gelöst. Vorteilhafte Ausgestaltungen der Erfindung sind Gegenstand der abhängigen Patentansprüche.

Das erfindungsgemässe Verfahren zeichnet sich dadurch aus, dass zur sicherheitsgerichteten Ansteuerung eines Stellgliedes, beispielsweise eines Brennstoffventils, zwei dynamische Signale mit unterschiedlicher Frequenz verwendet werden. Als dynamische Signale werden vorzugsweise rechteckförmige Signale verwendet, die von einem Mikroprozessor des Feuerungsautomaten in einfacher Art und Weise generiert werden können. Das aus dem ersten Signal mit niedriger Frequenz und dem zweiten Signal mit hoher Frequenz gebildete Frequenzverhältnis liegt vorzugsweise in einem Bereich von 0.001 bis 0.2. Das Signal mit der niedrigen Frequenz wird einem Bandpassfilter zugeführt und das Signal mit der hohen Frequenz wird einem Hochpassfilter zugeführt. Der Bandpassfilter ist so ausgelegt, dass die minimale Durchlassfrequenz grösser ist als die Frequenz des ersten Signals. Der Hochpassfilter ist so ausgelegt, dass die maximale Sperrfrequenz in jedem Fall kleiner ist als die Frequenz des zweiten Signals. Die Filterkurven des Hochbeziehungsweise des Bandpasses können sich im Fehlerfall partiell überlappen, wobei die Dimensionierung der Filter jedoch so gewählt ist, dass selbst bei Auftreten eines Bauteilfehlers in jedem Filter die Abschaltung des Stellgliedes sichergestellt ist.

Im Fall eines internen Bauteilfehlers des Mikroprozessors ist es möglich, dass der Mikroprozessor zwar dynamische Signale erzeugt. In einem solchen Fehlerfall wäre die Frequenz der beiden Signale jedoch nahezu gleich, wobei diese Frequenz jedoch in weiten Bereichen schwanken könnte. Die bei Auftreten eines solchen Fehlers durch den Hochpass beziehungsweise Bandpass erhaltene Filterfunktion bleibt jedoch wirksam, wodurch das Stellglied auch in diesem Fehlerfall abgeschaltet werden kann.

Die sicherheitsgerichtete Ansteuerung des Stellgliedes gemäss der Erfindung ermöglicht aufgrund der durch den Bandpass und Hochpass erhaltenen Signaltrennung auch bei einem internen Bauteilfehlers des Mikroprozessors Fehlerfall eine zuverlässige Abschaltung des Stellgliedes.

Weiterhin hat das erfindungsgemässe Verfahren beziehungsweise die Vorrichtung den Vorteil, dass die zur Ansteuerung des Stellgliedes von dem Mikroprozessor erzeugten dynamischen Signale in einem bestimmten Umfang Toleranz- beziehungsweise Fehler behaftet sein dürfen. Dadurch brauchen keine hohen Anforderungen an die Frequenzselektivität der Ansteuerung des Stellgliedes gestellt werden. Dadurch kann das erfindungsgemässe Verfahren mit geringem technischem Aufwand durchgeführt werden, wodurch die Vorrichtung einfach und kostengünstig aufgebaut sein kann.

Weitere Vorteile der Erfindung ergeben sich aus der nachfolgenden Beschreibung anhand der Figuren und aus den Patentansprüchen. Dabei zeigen:
Fig. 1 Funktionsblockschaltbild der Erfindung
Fig. 2 Filterkurven von Band- und Hochpass
Fig. 3 Bandpassschaltung, und
Fig. 4 Hochpassschaltung.

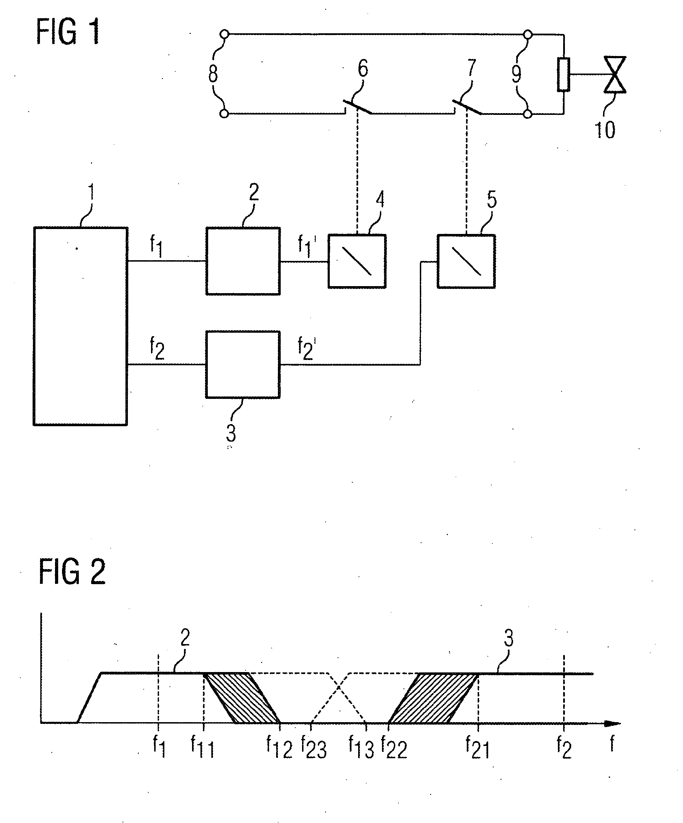

Fig.1 zeigt einen Mikroprozessor 1, der Bestandteil eines Feuerungsautomaten eines hier nicht dargestellten Brenners ist. Der Mikroprozessor ist zum Beispiel so programmiert, dass er bei der Brennerfreigabe zwei dynamische Signale mit den unterschiedlichen Frequenzen f₁ und f₂ erzeugt. Das aus der niedrigen Frequenz des Signals f₁ und der hohen Frequenz des zweiten Signals f₂ gebildete Frequenzverhältnis liegt vorzugsweise in der Grössenordnung von 0.001 bis 0.2. Die dynamischen Signale f₁ und f₂ sind beispielsweise rechteckförmige Signale. Das erste Signal mit der niedrigen Frequenz f₁ wird einem Bandpassfilter 2 zugeführt, der so aufgebaut ist, dass alle statischen Signale als auch alle dynamischen Signale oberhalb einer bestimmten Frequenz von diesem gesperrt werden. Das zweite Signal f₂ wird einem Hochpassfilter 3 zugeführt, der alle Signale unterhalb einer bestimmten Frequenz sperrt.

Das von dem Bandpassfilter 2 gefilterte Signal f_{1'} beziehungsweise das von dem Hochpassfilter gefilterte Signal f_{2'} wird einer Relaisspule 4 beziehungsweise einer Relaisspule 5 zugeführt, die mit den dazu entsprechenden Schaltern 6 und 7 eine Relaisstufe bilden. Die Schalter 6 und 7 sind in Reihe mit einer Energieversorgung 8 geschaltet. Die Schalter 6 und 7 bilden zusammen mit der Energieversorgung und einem Stellglied 10 einen Lastkreis 9. Das Stellglied 10 ist beispielsweise ein Brennstoffventil eines hier nicht dargestellten Brenners. Während des normalen, das heisst fehlerfreien Betriebes des Brenners sind die Schaltkontakte 6 und 7 geschlossen und das Brennstoffventil ist geöffnet. Bei Auftreten eines elektronischen Bauteilfehlers erfolgt entweder die Abschaltung des Stellgliedes 10 durch einen der Schalter 6 und 7 oder die Filterfunktion des Bandpasses 2 beziehungsweise des Hochpasses 3 bleibt erhalten.

Durch hier nicht näher erläuterte Massnahmen ist sichergestellt, dass die Schaltkontakte bei Normalbetrieb nicht verschweissen. Sollte dennoch ein Verschweissen der Kontakte, zum Beispiel aufgrund von Kurzschlüssen auftreten, so unterbricht eine hier nicht dargestellte Sicherung den Lastkreis irreversibel.

Figur 2 zeigt die Filterkurve des Bandpasses 2 und die Filterkurve des Hochpasses 3. Die Filterkurven des Band- und Hochpasses 2 und 3 sind so ausgelegt, dass die Frequenz f₁₂ kleiner ist als die Frequenz f₂₃ und die Frequenz f₁₃ kleiner ist als die Frequenz f₂₂. Die Filterkurven 2 und 3 dürfen sich im Fehlerfall partiell überschneiden. Die Abschaltung des Stellgliedes wird dadurch nicht beeinträchtigt. Der Bandpass 2 sperrt alle statischen Signale sowie alle dynamischen Signale oberhalb der Frequenz f₁₂.
Aufgrund von Bauteiltoleranzen und Umgebungseinflüssen kann sich die Durchlassfrequenz des Bandpasses bis zum Wert f₁₁ erniedrigen. Dieser Toleranzbereich ist schraffiert dargestellt. Zur Sicherstellung der Bandpassfunktion ist die minimale Durchlassfrequenz f₁₁ grösser als die Signalfrequenz f₁. Bei elektronischen Bauteilfehlern kann die obere Durchlassfrequenz des Bandpassfilters auf höchstens f₁₃ ansteigen.
Die untere Frequenzgrenze f₁₁ des Bandpassfilters ist so gewählt, dass bei Ausfall des dynamischen Signals f₁ eine Abschaltung des Bennstoffventils erfolgt.

Die Filterkurve 3 des Hochpasses sperrt alle Signale unterhalb der Frequenz f₂₂. Durch Bauteiltoleranzen und Umgebungseinflüsse kann sich die Sperrfrequenz bis zum Wert f₂₁ erhöhen. Dieser Bereich ist schraffiert dargestellt. Zur Sicherstellung der Funktion des Hochpassfilters ist die maximale Sperrfrequenz f₂₁ niedriger als die Signalfrequenz f₂. Bei elektronischen Bauteilfehlern kann sich die Sperrfrequenz des Hochpassfilters auf die Frequenz f₂₃ erniedrigen. Die maximale Sperrfrequenz des Hochpassfilters ist so gewählt, dass bei Ausfall des dynamischen Signals f₂ eine Abschaltung des Bennstoffventils erfolgt.

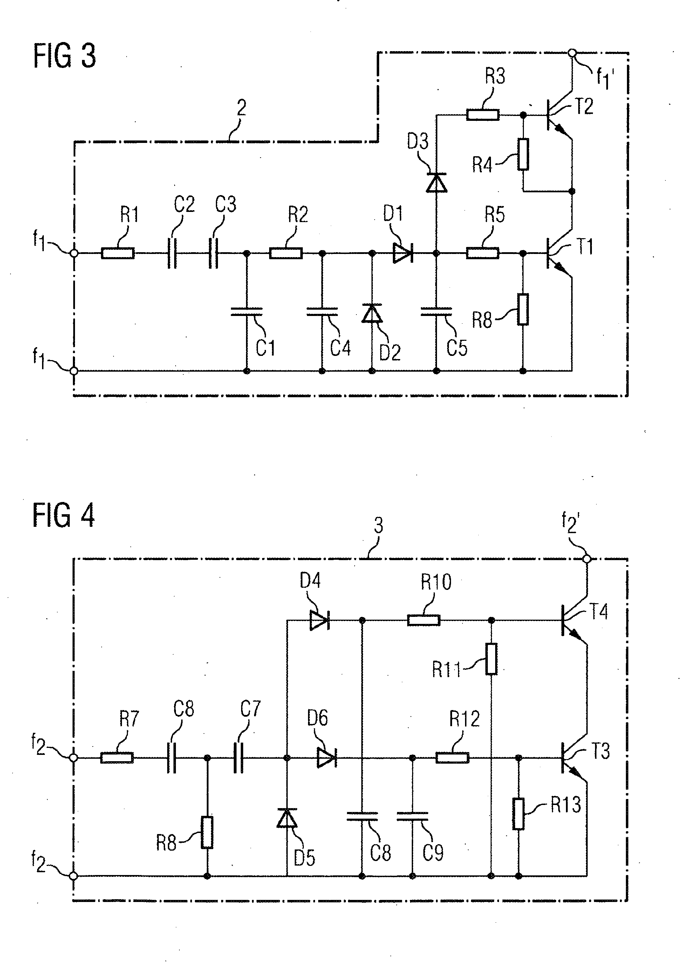

Figuren 3 und 4 zeigen ein bevorzugtes Ausführungsbeispiel einer elektronischen Schaltung des Bandpasses 2 und des Hochpasses 3. Die gezeigten Schaltungen zeichnen sich dadurch aus, dass trotz Auftreten eines elektronischen Bauteilfehlers in den Schaltungen 2 und 3 die Filterfunktion des Band- und des Hochpasses wirksam bleibt. Die Dimensionierung der Schaltungen ist so gewählt, dass die in Verbindung mit Figur 2 genannten Bedingungen erfüllt sind.

## Patentansprüche

1. Verfahren zur sicherheitsgerichteten Ansteuerung eines Stellgliedes (10), **dadurch gekennzeichnet, dass** zur Ansteuerung des Stellgliedes (10) von einem Mikroprozessor (1) ein erstes und ein zweites dynamisches Signal mit unterschiedlichen Frequenzen (f₁, f₂) erzeugt werden, die einem Bandpass (2) beziehungsweise einem Hochpass (3) zugeführt werden, wobei das erste dynamische Signal eine Frequenz aufweist (f₁) die kleiner ist als die minimale Durchlassfrequenz (f₁₁) des Bandpasses (2) und das zweite dynamische Signal (f₂), eine Frequenz aufweist die grösser als die maximale. Sperrfrequenz (f₂₁) des Hochpasses (3) ist, wobei im Fall eines Bauteilfehlers des Mikroprozessors die Abschaltung des Stellgliedes durch die von dem Bandpass (2) und dem Hochpass (3) erhaltenen Signale (f_{1'}, f_{2'}) innerhalb einer vorbestimmten Zeit erfolgt.

2. Verfahren nach Anspruch 1, **dadurch gekennzeichnet, dass** die beiden dynamischen Signale (f₁, f₂) rechteckförmig sind.

3. Verfahren nach Anspruch 1 oder 2, **dadurch gekennzeichnet, dass** das Frequenzverhältnis des ersten und zweiten dynamischen Signals (f₁/f₂) in der Größenordnung von 0.001 bis 0.2 liegt.

4. Vorrichtung zur Durchführung des Verfahrens nach einem der Ansprüche 1 bis 3, **dadurch gekennzeichnet, dass** ein Mikroprozessor (1) ein erstes und ein zweites dynamisches Signal mit unterschiedlichen Frequenzen (f₁, f₂) erzeugt, wobei das erste Signal von einem Bandpass (2) gefiltert wird, dessen minimale Durchlassfrequenz (f₁₁) grösser ist als die Frequenz des ersten Signals (f₁) und dass das zweite Signal (f₂) von einem Hochpass (3) gefiltert wird, dessen maximale Sperrfrequenz (f₂₁) kleiner ist als die Frequenz des zweiten Signals (f₂) und dass das von dem Bandpass (2) und dem Hochpass erhaltene Signal (f_{1'}, f_{2'}) eine Relaisstufe (4, 5, 6,7) ansteuert, durch die im Fall eines Bauteilfehlers des Mikroprozessors das Stellglied (10) abschaltbar ist.

5. Vorrichtung nach Anspruch 4, **dadurch gekennzeichnet, dass** das Stellglied (10) ein Brennstoffventil ist.

## Claims

1. Method for safety-oriented activation of an actuator (10) **characterized in that** to activate the actuator (10), the microprocessor (1) generates a first and a second dynamic signal with different frequencies (f₁, f₂) which are fed to a bandpass filter (2) or a high bandpass filter (3), wherein the first dynamic signal has a frequency (f₁) which is lower than the minimum transmission frequency (f₁₁) of the bandpass filter (2) and the second dynamic signal (f₂) has a frequency which is greater than the maximum rejection frequency (f₂₁) of the highpass filter (3), wherein in the event of a component fault in the microprocessor, the actuator is disconnected by the signals (f_{1'}, f_{2'}) received by the bandpass filter (2) and the highpass filter (3) within a predetermined period of time.

2. Method according to claim 1, **characterized in that** the two dynamic signals (f₁, f₂) are square-wave signals.

3. Method according to claim 1 or 2, **characterized in that** the frequency ratio of the first, and second dynamic signal (f₁/f₂) is in the range of 0.001 to 0.2.

4. Device for performing the method according to one of claims 1 to 3, **characterized in that** a microprocessor (1) generates a first and a second dynamic signal with different frequencies (f₁, f₂), wherein the first signal is filtered by a bandpass filter (2) whose minimum transmission frequency (f₁₁) is greater than the frequency of the first signal (f₁) and that the second signal (f₂) is filtered by a highpass filter (3) whose maximum rejection frequency (f₂₁) is lower than the frequency of the second signal (f₂) and that the signal (f₁', f₂') received by the bandpass filter (2) and the highpass filter actuates a relay stage (4, 5, 6, 7) by means of which in the event of a component fault in the microprocessor, the actuator (10) can be disconnected.

5. Device according to claim 4, **characterized in that** the actuator (10) is a fuel valve.

## Revendications

1. Procédé de commande sécurisée d'un actionneur (10), **caractérisé en ce que**, pour commander l'actionneur (10), un premier et un second signal dynamique de fréquences différentes (f₁, f₂) sont produits par un microprocesseur (1), lesquels signaux sont amenés à un filtre passe-bande (2) respectivement un filtre passe-haut (3), le premier signal dynamique ayant une fréquence (f₁) qui est inférieure à la fréquence de passage minimale (f₁₁) du filtre passe-bande (2) et le second signal dynamique (f₂) ayant une fréquence qui est supérieure à la fréquence de coupure maximale (f₂₁) du filtre passe-haut (3), la mise hors circuit de l'actionneur par les signaux (f_{1'}, f_{2'}) reçus par le filtre passe-bande (2) et le filtre passe-haut (3) se produisant dans un délai prédéterminé en cas de panne d'un compostant du microprocesseur.

2. Procédé selon la revendication 1, **caractérisé en ce que** les deux signaux dynamiques (f₁, f₂) sont rectangulaires.

3. Procédé selon la revendication 1 ou 2, **caractérisé en ce que** le rapport des fréquences du premier est du second signal dynamique (f₁/f₂) est d'un ordre de grandeur compris entre 0,001 et 0,2.

4. Dispositif pour exécuter le procédé selon l'une des revendications 1 à 3, **caractérisé en ce qu'**un microprocesseur (1) produit un premier et un second signal dynamique de fréquences différentes (f₁, f₂), le premier signal étant filtré par un filtre passe-bande (2) dont la fréquence de passage minimale (f₁₁) est supérieure à la fréquence du premier signal (f₁) et **en ce que** le second signal (f₂) est filtré par un filtre passe-haut (3) dont la fréquence de coupure maximale (f₂₁) est inférieure à la fréquence du second signal (f₂) et **en ce que** le signal (f_{1'}, f_{2'}) reçu par le filtre passe-bande (2) et le filtre passe-haut commande un étage à relais (4, 5, 6, 7) grâce auquel l'actionneur (10) peut être mis hors circuit en cas de panne d'un composant du microprocesseur.

5. Dispositif selon la revendication 4, **caractérisé en ce que** l'actionneur (10) est une soupape à combustible.
